# EUROPEAN PATENT SPECIFICATION

(11) **EP 0 717 670 B1**
(45) Date of publication and mention of the grant of the patent: **22.03.2000**
(21) Application number: 94926450.1
(22) Date of filing: 07.09.1994
(51) Int. Cl.: B23B 27/16, B23G 5/00, B23B 27/22

(54) **THREAD CUTTING INSERT WITH CHIP BREAKERS**
GEWINDESCHNEIDEINSATZ MIT SPANBRECHERN
PLAQUETTE D'OUTIL DE COUPE POUR FILETAGE AVEC BRISE-COPEAUX

(30) Priority: 10.09.1993 SE 9302945
(43) Date of publication of application: 26.06.1996
(73) Proprietor: SANDVIK AKTIEBOLAG, 811 81 Sandviken (SE)
(72) Inventor: ERICKSSON, Hakan, S-812 93 Kungsgarden (SE); LINDSTRÖM, Olle, S-811 32 Sandviken (SE)
(74) Representative: Taquist, Lennart
(86) International application number: PCT/SE94/00828
(87) International publication number: WO 95/07159

(56) References cited:
- EP-A- 0 119 175
- GB-A- 2 254 026

## Description

The present invention relates to a cutting insert for threading according to the precharacterizing portion of claim 1 (see e g GB-A-2254026) of substantially triangular form. The insert comprises a body having a flat upper surface, a plane parallel bottom surface and a number of edge surfaces therebetween. The edge surfaces meet at cutting corners each having a chamfered portion with a cutting tip. A recess is countersunk in the upper surface of the cutting corner portion, said recess being a chip breaker recess which extends from said tip and a distance inwards on said upper surface which is a chip face.

When threading with radial feed occurs a mainly V-shaped chip is obtained which is very stiff which makes it difficult to handle in a controllable manner. A non-triangular threading insert is known the nose portion of which is provided with a recess. The chip formation obtained with such insert, however, is not controllable because the degree of curvature of the chip becomes too large which results in chip jamming and an undesirable risky situation for the operator, the workpiece and the insert.

The object of the present invention is to provide a thread cutting insert that solves the above mentioned problems. The shape of the insert will give a good controlled chip removal in threading of materials from which fairly long chips are obtained. As a result thereof one and same threading insert can be used in operations with limited human resources where a continuous watch of chip entanglement is not possible.

It is another object of the invention to provide a threading insert that is optimized for internal threading whilst said insert being useful in standard type toolholders irrespective of the dimension of the cutting tip.

It is another object of the invention to provide a threading insert with such optimized form that a more efficient cooling of the cutting tip is possible.

It is yet another object of the invention to provide an insert with a chip face that is modified so that its form becomes favourable with regard to the cutting forces and the wear of such tool.

In accordance with another aspect of the invention such insert is provided with multiple cutting corners that can be indexed into several positions in the holder.

These and other objects of the invention will become apparent with reference to the following detailed description of a preferred embodiment of the invention made in conjunction with the drawings in which:
Fig. 1 is a top view of a threading insert for external threading according to the invention.
Fig. 2 is a side elevational view of the insert as shown in Fig. 1.
Fig. 3 is a top view of an enlarged cutting corner of the insert shown in Fig. 1.
Fig. 4 is a sectional view, taken along the line IV-IV in Fig. 3.
Fig. 5 is a sectional view taken along the line V-V in Fig. 1.
Fig. 6 is a top view of the insert in Fig. 1 after being located in an insert receiving pocket of a toolholder.
Fig. 7 is a top view of a threading insert for internal threading according to the invention.
Fig. 8 is a side view of the insert in Fig. 7.
Fig. 9 is a top view of an enlarged cutting corner of the insert in Fig. 7.
Fig. 10 is a sectional view taken along the line X-X in Fig. 9 and
Fig. 11 is a sectional view taken along the line XI-XI in Fig. 9.

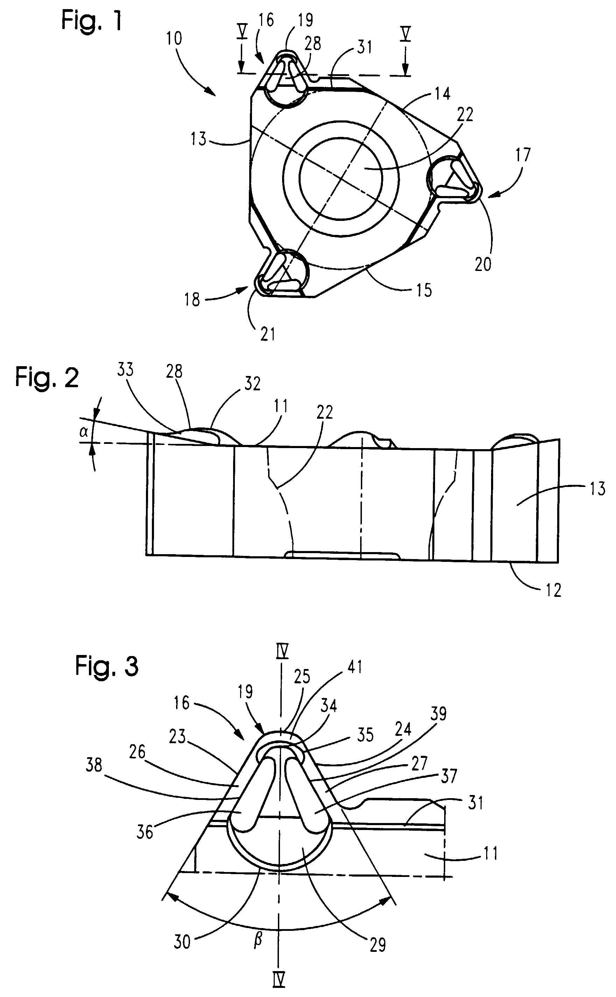

Referring to Fig. 1-3 the thread cutting insert 10 is in the form of a wafer of triangular form preferably made of cemented carbide. Other cutting materials can also be used such as oxide based ceramic material or cermet. The insert 10 comprises an upper face 11 and a lower face 12 situated opposite and generally parallel to said upper face 11, and a plurality of side walls 13, 14, 15 extending substantially perpendicularly therebetween. The insert 10 is provided with three identical cutting corner portions 16, 17, 18, each of which carries a cutting tip 19, 20, 21 which shall engage with and cut threads of a metallic workpiece (not shown). The insert 10 has a central aperture 22 for the receipt of a fastening screw for its mounting into an insert receiving pocket of a toolholder. The lower surface 12 of the insert has no cutting edges and is only intended for abutment against a supporting surface of said insert pocket.

In Fig. 3 is shown a cutting corner 16 having a cutting tip 19 arranged symmetrically to a line IV-IV. The cutting tip 19 which may also be unsymmetrically arranged has two main cutting edges 23, 24 extending in V-fashion and a corner cutting edge 25 located therebetween. The insert has primary phases 26, 27 inside said main cutting edges which come to a juncture at the cutting tip 19. The primary phases 26, 27 are located in a plane which slopes downwards towards the centre of the insert at an angle α that preferably amounts to 5-15°. The primary phases 26, 27 serve as edge reinforcement surfaces.

At a location inside the primary phases 26, 27 and the cutting tip 19 there is provided a raised portion 28 that is intended to serve as a chipbreaker. The raised portion 28 has a forwardly extending wedge shaped portion whereas its rear portion is terminated by a circularly formed rear edge 30. The wedged forward portion of said raised portion 28 is confined to the extension of the downwardly sloping plane that contains said primary phases 26, 27 whereas the rear portion 29 of raised portion 28 is convexly curved and terminated by the curved rear edge 30 that lies in the plane of the upper surface 11. More specifically, the wedged portion of said raised portion 28 extends to said curved rear portion 29 along a section line 31 which defines the transition between the plane of the primary phases 26, 27 and the upper chip face 11.

The upper surface 32 of said raised portion 28 is plane and extends downwards via surface 33 to a surface portion 34 that is convexly rounded and serves as a top surface of an essentially C-shaped upper surface portion 35, the forward portion of which is convex and directed towards the cutting tip 19. It is also a distinguishing feature that the side surfaces of said wedge formed portion 28 are provided with concave recesses 36 and 37.

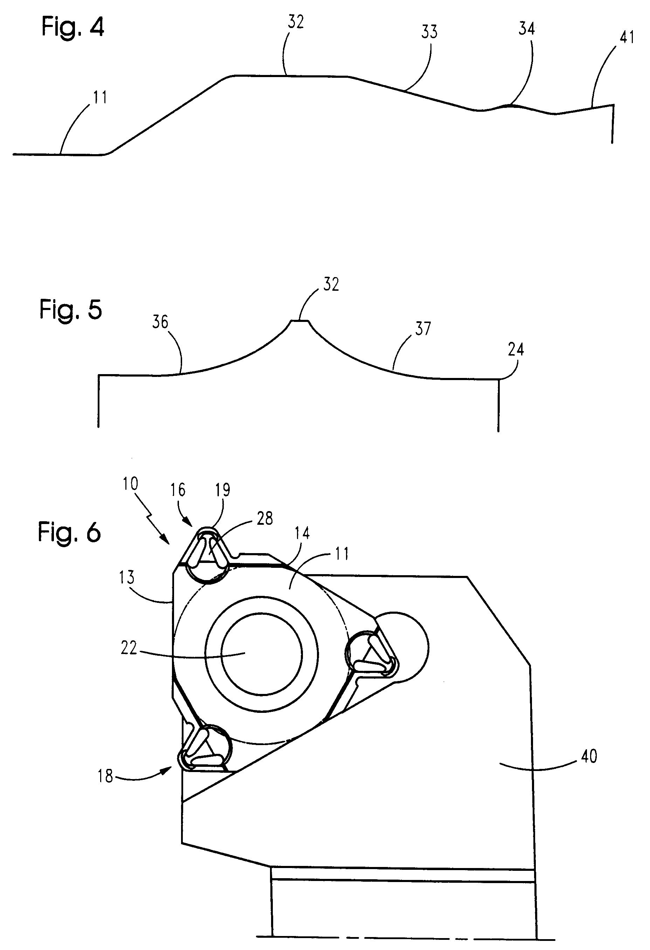

Fig. 6 illustrates the insert after being secured into a pocket of a toolholder 40, the bottom surface 12 of said insert being in abutment with a corresponding bottom support surface of said pocket. One cutting tip 19 of the insert is exposed from said pocket in order to engageable with a workpiece for cutting of threads.

The width of each of said primary phases 26, 27 is essentially smaller at the positions adjacent to said C-formed portion 35 compared with the width of said primary phases at locations closer located to the central portions of said insert. These primary phases 26, 27 extend forwardly in a corner phase 41 the width of which is somewhat larger than the width of said primary phases. The acute angle β between said main cutting edges 23, 24 amounts to 25-80°, preferably 50-70°.

At chasing of threads with radial feeding with a thread cutting insert according to the present invention, the chip will be cut by either of the cutting edges 23, 24 or along parts thereof and therefore the chip will be preformed while it follows an upward path towards the C-shaped portion 35 after which it is additionally formed by the recess 36 or 37 of the raised portion 28. The chip is then finally shaped and controlled by the inclined surface 33 so that it obtains a small radius of curvature like a spiral at the same time as the chip is guided away from the workpiece and the tool. Thanks to this form of the chip face at the V-shaped cutting corner 16 a satisfactory working result is achieved when using the same insert when machining different materials and at varying machining data. By limiting the chipbreaker 28 only to the corner region whilst providing the insert's central area as a recessed portion in relation to said chipbreaker it is possible to provide a more efficient supply of a cooling medium towards the active cutting tip.

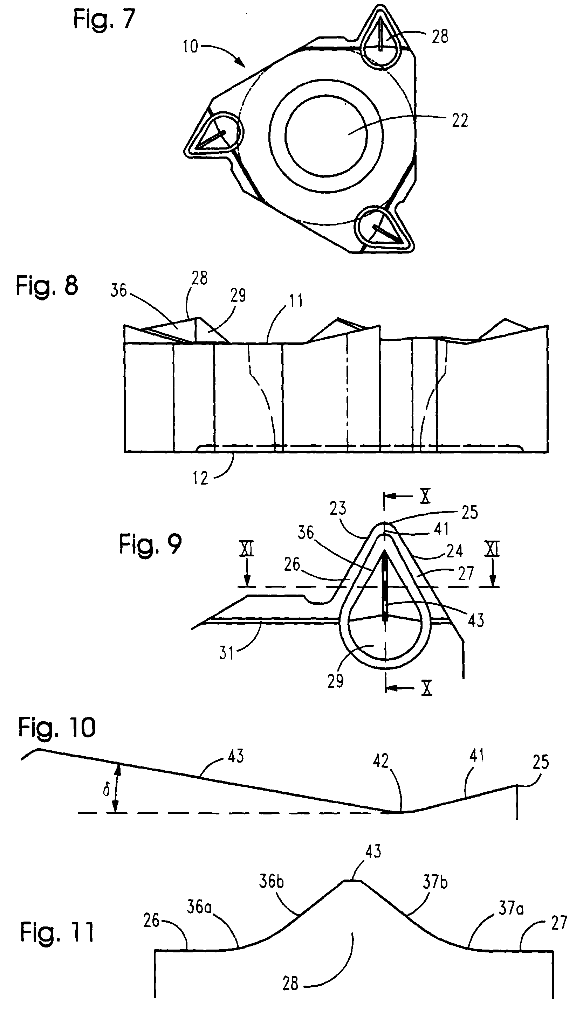

In Fig. 7-11 there is shown an alternative embodiment intended for internal thread cutting of a workpiece. In similarity with Fig. 1-3 each cutting corner has two main cutting edges 23, 24 and a curved cutting edge 25 therebetween. Each said corner is provided with a raised portion 28 the extension of which is confined to the corner area. The forward portion of said raised portion 28 located next to the corner edge 25 is essentially wedge-shaped whereas the rear portion 29 is convexly formed.

The limiting side surfaces of said portion 28 which are located adjacent the primary phases 26, 27 are partially in the form of concave recesses 36, 37 the cross section of which is composed by a circular portion 36a, 37a and a portion 36b, 37b with straight contour which join a plan top portion 43 which is essentially flat and intersects with the top surface of the insert at an angle δ of 5-20°. There is a difference in design with this insert in comparison with Fig. 1-3 to the extent that the insert of Fig. 7-11 lacks the provision of a convexly raised portion 34 as shown in Fig. 4. The insert has a bevelled phase 41 next to the corner edge 25 which extends, via a concave recess 42, into the upwardly inclined plane surface 43. Thanks to this embodiment a more efficient chipbreaking and chip removal can be achieved during internal thread cutting thereby avoiding problematic chip entanglement that would otherwise occur.

## Claims

1. A thread cutting insert (10) comprising upper and lower faces (11, 12) interconnected by at least three side walls (13, 14, 15) and forming a centre portion from which at least one cutting corner (16, 17, 18) projects outwardly, said cutting corner including a pair of outwardly and upwardly converging cutting edges (23, 24), the outer ends of which are interconnected by a curved cutting tip (19, 20, 21,) a top surface of said cutting corner being inclined upwardly and outwardly at an angle with respect to said upper face of said centre portion, said top surface including a chip breaking projection (28) extending upwardly from said upper face of said centre portion, said projection (28) having opposite sides extending adjacent respective ones of said cutting edges and converging toward one another in an upward direction and in an outward direction toward said cutting tip, said sides being spaced from respective ones of said cutting edges (23, 24) such that said top surface forms a phase (26, 27) between each of said sides and its respective cutting edge (23, 24), projection (28) further including front and rear portions, said front portion being disposed on said upwardly and outwardly inclined top surface and inclined downwardly generally toward said tip and is limited by the downwardly inclined surface which includes said phases (26, 27), said rear portion being disposed on said upper face of said centre portion;
characterized in that, the said curved cutting tip (19, 20, 21) is situated higher than said upper face of said centre portion, said chip breaking projection (28) extending upwards so that it is higher than both the upper surface of said centre portion and the said curved cutting tip (19, 20, 21), and that the phases (26, 27) extend at an angle (α) in relation to a horizontal plane that amounts to 5-15°.

2. Thread cutting insert according to claim 1, characterized in that the projection (28) is located at a distance from the main cutting edges (23, 24) and from the corner edge (25) whereby the surface portions between said projection and said main cutting edge serve as edge reinforcing phases (26, 27)

3. The thread cutting insert according to any of the claims 1-2, characterized in that the forward portion of said projection (28) extends to a rear convexly curved portion (29) at the position of the section line (31) which defines the transition between the plane that contains the primary phases (26, 27) and the upper chip surface (11).

4. Thread cutting insert according to claim 3, characterized in that the rear portion (29) of the wedge shaped projection is terminated by a circularly curved rear edge.

5. Thread cutting insert according to any of the claims 1-4, characterized in that the forward portion (35) of the projection (28) is located on a lower level than the rear portion thereof whereby said forward portion (35) is essentially C-shaped having its convexly curved side faced against the cutting tip (19).

6. Thread cutting insert according to any of the claims 1-5, characterized in that the side surfaces of the projection (28) are in the form of concave recesses (36, 37).

7. Thread cutting insert according to any of the claims 1-6, characterized in that the upper surface (32) of the projection (28) is flat and extends, via a downwards inclined surface (33), into a surface (34) that is convexly shaped and defines the upper surface of the C-shaped portion (35).

8. Thread cutting insert according to any of the claims 1-6, characterized in that the upper surface of the projection (28) is flat and extends downwards to a concave surface (42) which then extends into an upwardly inclined bevelled phase (41) which is terminated by the corner edge (25).

9. Thread cutting insert according to claim 8, characterized in that the recesses (36, 37) each comprises, as seen in cross-section, a concave portion (36a, 37a) located next to the primary phase (26, 27) and a flat surface portion (36b, 37b).

10. Thread cutting insert according to any of the claims 1-9, characterized in that the top portion (43) of the projection (28) extends obliquely at an angle (δ) of 5-20° in relation to the upper surface (11) of the insert.

## Patentansprüche

1. Gewindeschneideinsatz (10) mit oberen und unteren Flächen (11, 12), die durch mindestens drei Seitenwände (13, 14, 15) verbunden sind und einen Mittelteil bilden, von welchem mindestens eine Schneidecke (16,17, 18) nach außen hervorsteht, wobei die Schneidecke ein Paar von nach außen und nach oben konvergierenden Schneidkanten (23, 24) aufweist, deren äußere Enden durch eine gekrümmte Schneidspitze (19, 20, 21) verbunden sind, eine obere Oberfläche der Schneidecke nach oben und nach außen unter einem Winkel bezüglich der oberen Fläche des Mittelteils geneigt ist, wobei die obere Oberfläche einen spanbrechenden Vorsprung (28) aufweist, der sich nach oben von der oberen Fläche des Mittelteils erstreckt, der Vorsprung (28) entgegengesetzte Seiten hat, die sich jeweils neben einer der Schneidkanten erstrecken und gegeneinander in einer nach oben gerichteten Richtung und in einer nach außen gerichteten Richtung gegen die Schneidspitze konvergieren, wobei die Seiten von jeweils einer der Schneidkanten (23, 24) so im Abstand gehalten sind, daß die obere Oberfläche Fasen (26, 27) bildet, die zwischen jeder der Seiten und ihrer jeweiligen Schneidkante (23, 24) liegen, wobei der Vorsprung (28) ferner vordere und hintere Teile aufweist, der vordere Teil auf der nach oben und nach außen geneigten oberen Oberfläche angeordnet ist und nach unten im allgemeinen gegen die Spitze geneigt und durch die nach unten geneigte Oberfläche begrenzt ist, welche die Fasen (26, 27) aufweist, wobei der rückwärtige Teil auf der oberen Fläche des Mittelteils angeordnet ist, **dadurch gekennzeichnet, daß** die gekrümmte Schneidspitze (19, 20, 21) höher angeordnet ist als die obere Fläche des Mittelteils, wobei sich der spanbrechende Vorsprung (28) nach oben so erstreckt, daß er höher ist als sowohl die obere Oberfläche des Mittelteils als auch die gekrümmte Schneidspitze (19, 20, 21) und daß sich die Fasen (26, 27) unter einem Winkel (α) bezüglich einer horizontalen Ebene erstrecken, der von 5 - 15° beträgt.

2. Gewindeschneideinsatz nach Anspruch 1, dadurch gekennzeichnet, daß der Vorsprung (28) in einem Abstand von den Hauptschneidkanten (23, 24) und von der Eckenkante (25) angeordnet ist, wodurch die Oberflächenteile zwischen dem Vorsprung und der Hauptschneidkante als Kantenverstärkungsfasen (26, 27) dienen.

3. Gewindeschneideinsatz nach einem der Ansprüche 1 bis 2, dadurch gekennzeichnet, daß sich der vordere Teil des Vorsprunges (28) zu einem rückwärtigen, konvex gekrümmten Teil (29) an der Position der Schnittlinie (31) erstreckt, welche den Übergang zwischen der Ebene bestimmt, welche die Primärfasen (26, 27) und die obere Spanoberfläche (11) enthält.

4. Gewindeschneideinsatz nach Anspruch 3, dadurch gekennzeichnet, daß der rückwärtige Teil (29) des keilförmigen Vorsprunges durch eine kreisförmig gekrümmte rückwärtige Kante begrenzt ist.

5. Gewindeschneideinsatz nach einem der Ansprüche 1 bis 4, dadurch gekennzeichnet, daß der vordere Teil (35) des Vorsprunges (28) auf einem tieferen Niveau als dessen rückwärtiger Teil angeordnet ist, wodurch der vordere Teil (35) im wesentlichen C-förmig ist und seine konvex gekrümmte Seite gegen die Schneidspitze (19) zugekehrt ist.

6. Gewindeschneideinsatz nach einem der Ansprüche 1 bis 5, dadurch gekennzeichnet, daß die Seitenoberflächen des Vorsprunges (28) die Form von konkaven Ausnehmungen (36, 37) haben.

7. Gewindeschneideinsatz nach einem der Ansprüche 1 bis 6, dadurch gekennzeichnet, daß die obere Oberfläche (32) des Vorsprunges (28) flach ist und sich über eine nach unten geneigte Oberfläche (33) in eine Oberfläche (34) erstreckt, die konvex geformt ist und die obere Oberfläche des C-förmigen Teils (35) bestimmt.

8. Gewindeschneideinsatz nach einem der Ansprüche 1 bis 6, dadurch gekennzeichnet, daß die obere Oberfläche des Vorsprunges (28) flach ist und sich nach unten zu einer konkaven Oberfläche (42) erstreckt, die sich dann in eine nach oben geneigte abgeschrägte Fase (41) erstreckt, die durch die Eckenkante (25) begrenzt ist.

9. Gewindeschneideinsatz nach Anspruch 8, dadurch gekennzeichnet, daß die Ausnehmungen (36, 37) jede, wie man im Querschnitt sieht, einen konkaven Teil (36a, 37a) aufweist, der in unmittelbarer Nähe der Primärfase (26, 27) angeordnet ist, und einen flachen Oberflächenteil (36b, 37b) aufweist.

10. Gewindeschneideinsatz nach einem der Ansprüche 1 bis 9, dadurch gekennzeichnet, daß sich der obere Teil (43) des Vorsprunges (28) schräg unter einem Winkel (δ) von 5 - 20° bezüglich der oberen Oberfläche (11) des Einsatzes erstreckt.

## Revendications

1. Plaquette de coupe pour filetage (10) comprenant des faces supérieure et inférieure (11, 12) reliées l'une à l'autre par au moins trois parois latérales (13, 14, 15) et formant une partie centrale à partir de laquelle au moins un bec de coupe (16, 17, 18) fait saillie vers l'extérieur, ledit bec de coupe comprenant une paire d'arêtes tranchantes convergeant vers l'extérieur et vers le haut (23, 24), dont les extrémités externes sont reliées l'une à l'autre par une pointe de coupe incurvée (19, 20, 21), une surface supérieure dudit bec de coupe étant inclinée vers le haut et vers l'extérieur suivant un angle par rapport à ladite face supérieure de ladite partie centrale, ladite surface supérieure comprenant une saillie de broyage de copeaux (28) s'étendant vers le haut à partir de ladite face supérieure de ladite partie centrale, ladite saillie (28) présentant des faces opposées s'étendant à proximité d'arêtes respectives parmi lesdites arêtes tranchantes et convergeant l'une vers l'autre en direction du haut et en direction de l'extérieur vers ladite pointe de coupe, lesdites faces étant espacées par rapport à des arêtes respectives parmi lesdites arêtes tranchantes (23, 24) de sorte que ladite surface supérieure forme une face (26, 27) située entre chacune desdites faces et son arête tranchante respective (23, 24), ladite saillie (28) comprenant en outre des parties avant et arrière, ladite partie avant étant disposée sur ladite surface supérieure inclinée vers le haut et vers l'extérieur et inclinée vers le bas d'une façon générale en direction de ladite pointe, et est limitée par la surface inclinée vers le bas qui comprend lesdites faces (26, 27), ladite partie arrière étant disposée sur ladite face supérieure de ladite partie centrale,
caractérisée en ce que, ladite pointe de coupe incurvée (19, 20, 21) est située plus haut que ladite face supérieure de ladite partie centrale, ladite saillie de broyage de copeaux (28) s'étendant vers le haut de sorte qu'elle est plus haute qu'à la fois la surface supérieure de ladite partie centrale et ladite pointe de coupe incurvée (19, 20, 21), et en ce que les faces (26, 27) s'étendent suivant un angle (α) par rapport à un plan horizontal qui s'élève à une valeur de 5 à 15°.

2. Plaquette de coupe pour filetage selon la revendication 1, caractérisée en ce que la saillie (28) est située à une certaine distance des arêtes tranchantes principales (23, 24) et de l'arête de bec (25), grâce à quoi les parties de surface entre ladite saillie et ladite arête tranchante principale servent de faces de renforcement d'arêtes (26, 27) .

3. Plaquette de coupe pour filetage selon l'une quelconque des revendications 1 à 2, caractérisée en ce que la partie antérieure de ladite saillie (28) s'étend jusqu'à une partie arrière incurvée de façon convexe (29) à l'emplacement de la ligne de section (31) qui définit la transition entre le plan qui contient les faces principales (26, 27) et la surface de coupe supérieure (11).

4. Plaquette de coupe pour filetage selon la revendication 3, caractérisée en ce que la partie arrière (29) de la saillie en forme de coin se termine par un bord arrière incurvé de façon circulaire.

5. Plaquette de coupe pour filetage selon l'une quelconque des revendications 1 à 4, caractérisée en ce que la partie antérieure (35) de la saillie (28) est située à un niveau plus bas que la partie arrière de celle-ci, grâce à quoi ladite partie antérieure (35) est sensiblement en forme de C présentant son côté incurvé de façon convexe tourné vers la pointe de coupe (19) .

6. Plaquette de coupe pour filetage selon l'une quelconque des revendications 1 à 5, caractérisée en ce que les surfaces latérales de la saillie (28) se présentent sous la forme d'évidements concaves (36, 37).

7. Plaquette de coupe pour filetage selon l'une quelconque des revendications 1 à 6, caractérisée en ce que la surface supérieure (32) de la saillie (28) est plate et s'étend, par l'intermédiaire d'une surface inclinée vers le bas (33), jusque dans une surface (34) qui est formée de façon convexe et définit la surface supérieure de la partie en forme de C (35).

8. Plaquette de coupe pour filetage selon l'une quelconque des revendications 1 à 6, caractérisée en ce que la surface supérieure de la saillie (28) est plate et s'étend vers le bas jusqu'à une surface concave (42) qui s'étend ensuite jusque dans une face biseautée inclinée vers le haut (41) qui se termine par l'arête de bec (25).

9. Plaquette de coupe pour filetage selon la revendication 8, caractérisée en ce que les évidements (36, 37) comprennent chacun, observés en section transversale, une partie concave (36a, 37a) située près de la face principale (26, 27) ainsi qu'une partie de surface plate (36b, 37b) .

10. Plaquette de coupe pour filetage selon l'une quelconque des revendications 1 à 9, caractérisée en ce que la partie supérieure (43) de la saillie (28) s'étend de façon oblique suivant un angle (δ) de 5 à 20° par rapport à la surface supérieure (11) de la plaquette.
